(19) **Europäisches Patentamt / European Patent Office / Office européen des brevets**

(11) **EP 4 252 202 B1**

(12) # EUROPEAN PATENT SPECIFICATION

(45) Date of publication and mention
of the grant of the patent:
**05.11.2025 Bulletin 2025/45**

(21) Application number: **21819103.9**

(22) Date of filing: **22.11.2021**

(51) International Patent Classification (IPC):
**G06V 20/56** *(2022.01)*     **G06V 10/98** *(2022.01)*
**G06V 10/766** *(2022.01)*

(52) Cooperative Patent Classification (CPC):
**G06V 20/588; G06V 10/766; G06V 10/98;
G06V 10/993**

(86) International application number:
**PCT/EP2021/082504**

(87) International publication number:
**WO 2022/112175 (02.06.2022 Gazette 2022/22)**

(54) **ROAD MARKING DETECTION**

STRASSENMARKIERUNGSERKENNUNG

DÉTECTION DE MARQUAGE DE ROUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2020 DE 102020131130**

(43) Date of publication of application:
**04.10.2023 Bulletin 2023/40**

(73) Proprietor: **Valeo Schalter und Sensoren GmbH
74321 Bietigheim-Bissingen (DE)**

(72) Inventors:
• **ROJAS QUINONES, Mario
74321 Bietigheim-Bissingen (DE)**
• **HUBER, Marc
74321 Bietigheim-Bissingen (DE)**
• **TRUSOV, Viktor
74321 Bietigheim-Bissingen (DE)**

(74) Representative: **Pothmann, Karsten
Valeo Schalter und Sensoren GmbH
CDA-IP
Laiernstraße 12
74321 Bietigheim-Bissingen (DE)**

(56) References cited:
**DE-A1- 102020 131 130     US-A1- 2019 384 304**

• GRUYER DOMINIQUE ET AL: "Map-aided
localization with lateral perception", 2014 IEEE
INTELLIGENT VEHICLES SYMPOSIUM
PROCEEDINGS, IEEE, 8 June 2014 (2014-06-08),
pages 674 - 680, XP032620378, DOI: 10.1109/
IVS.2014.6856528
• GEHRIG S K ET AL: "Dead reckoning and
cartography using stereo vision for an
autonomous car", INTELLIGENT ROBOTS AND
SYSTEMS, 1999. IROS '99. PROCEEDINGS. 1999
IEEE /RSJ INTERNATIONAL CONFERENCE ON
KYONGJU, SOUTH KOREA 17-21 OCT. 1999,
PISCATAWAY, NJ, USA,IEEE, US, vol. 3, 17
October 1999 (1999-10-17), pages 1507 - 1512,
XP010362318, ISBN: 978-0-7803-5184-4, DOI:
10.1109/IROS.1999.811692
• AKAI NAOKI ET AL: "Autonomous driving based
on accurate localization using multilayer LiDAR
and dead reckoning", 2017 IEEE 20TH
INTERNATIONAL CONFERENCE ON
INTELLIGENT TRANSPORTATION SYSTEMS
(ITSC), IEEE, 16 October 2017 (2017-10-16),
pages 1 - 6, XP033330456, DOI: 10.1109/
ITSC.2017.8317797

**Description**

The present invention is directed to a method for road marking detection, wherein a first sensor dataset depicting a road marking at a first measurement instance and a second sensor dataset depicting the road marking at a second measurement instance are generated by using an environmental sensor system. The invention is further related to a method for guiding a motor vehicle at least in part automatically, to a road marking detection system, to an electronic vehicle guidance system, to a computer program and to a computer-readable storage medium.

Advanced driver assistance systems, ADAS, as well as systems for guiding a motor vehicle automatically or autonomously make use of data generated by environmental sensor systems, such as cameras or lidar systems, mounted at different positions of the motor vehicle. In particular, the data generated by the environmental sensor systems may be used to identify and detect road markings on a road, which the vehicle is travelling on. The location, shape and type of road markings represent important input for automatic or semi-automatic driving functions. However, the reliability of the road marking detection and, consequently, of the subsequent functions using the results of the road marking detection, may be impaired by external disturbances or noise.

Document US 7,933,433 B2 describes an apparatus for recognizing lane markers. The apparatus is able to extract data on a lane marker based on a center line position, a center line shape and width of a lane, which are projected for the present cycle.

GRUYER ET AL: Map-aided localization with lateral perception" discloses a method for vehicle localization using camera-based detection of road markings combined with dead reckoning and map data, applying an Extended Kalman Filter to estimate and correct the vehicle's pose.

GEHRIG SK ET AL: "Dead reckoning and cartography using stereo vision for an autonomous car" discloses a method for autonomous vehicle localization using stereo vision to build 3D maps, combined with dead reckoning data to update vehicle pose.

AKAI NAOKI ET AL: "Autonomous driving based on accurate localization using multilayer LiDAR and dead reckoning" discloses a method for vehicle pose estimation by matching multilayer LiDAR point clouds to a static map, using dead reckoning and GPS data with an Extended Kalman Filter.

It is therefore an object of the present invention to provide an improved concept for road marking detection, which increases reliability.

This object is achieved by the respective subject-matter of the independent claims. Further implementations and preferred embodiments are subject-matter of the dependent claims.

According to the improved concept, a method for road marking detection is provided.

Therein, a first sensor dataset depicting a road marking, which is in particular located on a road, at a first measurement instance and a second sensor dataset depicting the road marking at a second measurement instance are generated by using an environmental sensor system, in particular of a motor vehicle, which is driving on the road. At least one motion parameter characterizing a motion of the environmental sensor system relative to the road marking between the first measurement instance and the second measurement instance is determined. A computing unit is used to generate a first observed state vector based on the first sensor dataset, wherein the first observed state vector describes the road marking geometrically at the first measurement instance. The computing unit is used to generate, based on the second sensor dataset, a second observed state vector describing the road marking geometrically at the second measurement instance. The computing unit is used to compute a predicted state vector for the second measurement instance depending on the at least motion parameter and on the first observed state vector. The computing unit is used to generate a corrected state vector for the second measurement instance depending on the predicted state vector and the second observed state vector.

The road marking, also denoted as lane marking or road surface marking, may for example comprise one or more straight or curved lines, for example single lines, double lines, triple lines and so forth. The line or lines may be continuous or may comprise interrupted line segments. Also, combinations of the same type of lines and/or different types of lines may be comprised by a road marking.

An environmental sensor system may be understood as a sensor system which is able to generate the sensor data or sensor signals, which depict, represents or image an environment of the environmental sensor system. For example, cameras, lidar systems, radar systems or ultrasonic sensor systems may be considered as environmental sensor systems. Preferably, the environmental sensor system comprises a camera system or a lidar system.

The environmental sensor system may generate respective sensor datasets corresponding to a time series of consecutive discrete measurement instances comprising the first and the second measurement instance. Each measurement instance may correspond to a discrete point in time. Nevertheless, depending on the type of environmental sensor system used, the measurements for a given measurement instance may require a certain time interval. For example, in case of a camera as the environmental sensor system, each measurement instance may correspond to a respective video frame. In case of a scanning lidar system, each measurement instance may correspond to a scanning period, et cetera.

The second measurement instance follows the first measurement instance, in particular follows the first measurement instance directly. In general, the environmental sensor system and the vehicle move between the first and the second measurement instance, such that the relative position and/or orientation of the road marking with respect to the environmental sensor system changes between the first and the second measurement instance.

For generating a respective observed state vector, the computing unit may determine a geometric approximation to the road marking depending on the respective sensor dataset and store two or more parameters according to the approximation as the respective observed state vector. The geometric approximation of the road marking may for example be carried out in a predefined coordinate system, which is rigidly connected to the sensor system.

For example, the coordinate system may be defined by a longitudinal axis, a lateral axis and a normal axis, wherein all three of the axes are perpendicular to each other. Therein, the longitudinal axis and the lateral axis may for example define a plane, which is approximately parallel to the road surface. The longitudinal axis, the lateral axis and the normal axis may also correspond to the respective axes of the motor vehicle or may be transformed to these axes by means of a predefined coordinate transformation which may for example be determined by a sensor calibration.

To approximate the road marking in the predefined coordinate system, the computing unit may for example carry out a polynomial approximation. For example, the road marking may be approximated by a polynomial of second degree. In this case, a coefficient of the respective polynomial may correspond to a constant position or offset of the road marking or of a defined point of the road marking from one of the axes of the coordinate system, for example, the longitudinal axis. Further coefficients of the respective polynomial may correspond to a direction and a curvature of the road marking at the respective point.

The observed state vectors may for example comprise the polynomial coefficients resulting from the approximation or quantities that are derived from the polynomial coefficients.

The at least one motion parameter may for example be determined by one or more motion sensors of the vehicle, such as acceleration sensors, yaw-rate sensors, et cetera, or depending on the output of the motion sensors. For example, the at least one motion parameter may comprise a longitudinal velocity of the environmental sensor system in the direction of the longitudinal axis and/or a lateral velocity of the environmental sensor system in the direction of the lateral axis and/or a yaw-rate of the environmental sensor system with respect to the normal axis.

By taking into account the at least one motion parameter for computing the predicted state vector based on the first observed state vector, the first observed state vector is subjected to the state dynamics defined by the at least one motion parameter. The predicted state vectors is then corrected depending on the actual observation at the second measurement instance, namely based on the second observed state vector. In this way, errors due to external disturbances or noise, which are inevitably affecting the observed state vectors, may be reduced. Consequently, the reliability of the corrected state vector for subsequent applications, such as driver assistance functions or autonomous driving functions, is improved compared to the second observed state vector.

The at least one motion parameter may for example be affected by noise, which may decrease the quality of the prediction of the state vector. Nonetheless, the resulting availability of the predicted state allows the state vectors to be corrected based on the actual observation at the second measurement instance, namely based on the second observed state vector. Therefore, even if the at least one motion parameter cannot be measured at all, the prediction may be carried out nevertheless, for example assuming historic or estimated values for the at least one motion parameter.

In particular, the corrected state vector may be considered as a part of an output of the road marking detection. The method steps described with respect to the first and the second measurement instance may be carried out iteratively or repeatedly for a plurality of consecutive measurement instances to obtain a time series of corrected state vectors contributing to the output of the road marking detection. In this way, a particularly reliable input for automatic driving functions or driver assistance functions is provided.

By representing the road marking by means of respective parameters that describe its underlying pattern geometrically, the output of the road marking detection may be stabilized. In particular, represented the road markings by means of the state vectors allows for a reliable prediction and correction compared to a prediction of the sensor data themselves, such as points of a point cloud. In other words, instead of conventional object tracking, the state of the road marking may effectively be tracked.

According to several implementations of the method for road marking detection, the computing unit is used to generate two or more first sampling state vectors for the first measurement instance depending on the first observed state vector and at least one parameter describing a multidimensional distribution. The predicted state vector is computed depending on the two or more first sampling state vectors.

The at least one parameter describing the multidimensional distribution may for example comprise respective variances and/or covariances of the quantities contained by the entries of the observed first state vector. For example, the computing unit may determine a covariance matrix for each measurement instance, in particular for the first measurement instance. For example, denoting the first observed state vector as $x_0 = (a, b, ...)$, the respective covariance matrix reads:

$$S= \begin{pmatrix} \sigma_a{}^2 & \sigma_{ab} & \cdots \\ \sigma_{ba} & \sigma_b{}^2 & \cdots \\ \vdots & \vdots & \ddots \end{pmatrix}$$

Therein, the variances $\sigma a^2$, $\sigma b^2$, ... and covariances $\sigma_{ab}$, $\sigma_{ba}$, ... contained in the covariance matrix may for example be determined by the computing unit based on sensor datasets generated by the environmental sensor system for measurement instances prior to the first measurement instance. Alternatively or in addition, values for variances $\sigma a^2$, $\sigma_b{}^2$, ... and covariances $\sigma_{ab}$, $\sigma_{ba}$, ... may be output by the environmental sensor system in case these values are known upfront, for example from calibration. Also a combination of both approaches is possible.

Then, two or more first sampling state vectors may be, for example, parameterized as follows:

$$x_i = \begin{cases} \mu + \left[\sqrt{(n+\lambda)S}\right]_i & 1 \leq i \leq n \\ \mu - \left[\sqrt{(n+\lambda)S}\right]_{i-n} & n \leq i \leq 2n. \end{cases}$$

Therein, $\lambda = (\alpha^2(n+\kappa)-n)$ is a scaling parameter, n is the number of dimensions of the state vector and $\alpha$ and $\kappa$ are predefined parameters controlling the spread of the points from the mean $\mu$, which may for example be given by the entries of $x_0$. The subscript i chooses the i-th column vector of the covariance matrix S.

In this way, the first observed state vector forms together with the two or more first sampling state vectors for the first measurement instance a population for a corresponding distribution described by the at least one parameter $\alpha$, $\kappa$ describing the multidimensional distribution. For computing the predicted state vector for the second measurement instance, the population for the first measurement instance comprising the first observed state vector and the two or more first sampling state vectors may be projected to the second measurement instance depending on the at least one motion parameter.

In this way, effects due to error or disturbances on the sensor datasets may be minimized in an efficient way. In particular, it is not necessary that the actual distribution of the entries on the observed state vectors follow a Gaussian distribution.

According to several implementations, the computing unit is used to determine a first polynomial depending on the first sensor dataset to approximate the road marking at the first time instance and to determine a second polynomial depending on the sensor dataset to approximate the road marking at the second time instance. The first observed state vector comprises coefficients of the first polynomial, in particular all coefficients of the first polynomial, and the second observed state vector comprises coefficients of the second polynomial, in particular all coefficients of the second polynomial.

The first and the second polynomial are for example polynomials of first degree or higher degree, preferably of second degree. In this case, the coefficients of the first and the second polynomial may be understood to concern a constant offset, a direction and a curvature, respectively.

The computing unit may perform a fit algorithm to determine the first and second polynomial depending on the first and the sensor dataset, respectively. In this way, rather accurate estimations of the road marking may be obtained without involving computational expensive approaches. In particular, representing the road marking by the polynomial coefficients is more efficient in comparison to a tracking of raw output of the environmental sensor system.

According to several implementations, the computing unit is used to compute a predicted covariance matrix for the second measurement instance depending on the at least one motion parameter, the first observed state vector and the predicted state vector. The computing unit is used to generate a corrected covariance matrix for the second measurement instance depending on the predicted covariance matrix and the second observed state vector.

The output of the road marking detection may comprise the corrected covariance matrix and, if applicable, the respective corrected covariance matrix for further measurement instances.

The corrected covariance matrix provides a suitable means to assess the spread and distribution of the parameters describing the road marking and therefore to assess the reliability of the measurement results for use in a driver assistance function or a function for autonomous driving.

As described with respect to the predicted state vector for the second time instance, also the predicted covariance matrix for the second measurement instance may be computed depending on the two or more first sampling state vectors.

According to several implementations, a plurality of sensor dataset depicting the road marking at respective consecutive measurement instances is generated by using the environmental sensor system, wherein the plurality of sensor datasets includes the first sensor dataset and the second sensor dataset. For each of the measurement instances, the at least one motion parameter characterizing the motion of the environmental sensor system relative to the road marking between the respective measurement instance and a respective subsequent measurement instance is determined. For each of the measurement instances, the computing unit is used to generate a respective observed state vector describing the road marking geometrically at the respective measurement instance based on the respective sensor dataset. For each of the measurement instances or for each of the measurement instances except a final measurement instance, the computing unit is used to compute a predicted state vector for a respective subsequent measurement instance depending on the respective at least one motion parameter between the respective measurement instance and the respective subsequent measurement instance and depending on the observed state vector of the respective measurement instance. For each of the measurement instances or for each of the measurement instances except the final measurement instance, the computing unit is used to generate a corrected state vector for a respective subsequent measurement instance depending on the predicted state vector for the respective subsequent measurement instance and the observed state vector of the respective subsequent measurement instance.

The explanations with respect to the first observed state vector and the second observed state vector as well as the first measurement instance and the second measurement instance may be analogously applied to each measurement instance of the plurality of consecutive measurement instances and its respective subsequent measurement instance. In particular, except for the final measurement instance, each measurement instance has exactly one respective subsequent measurement instance. Consequently, a time series of corrected state vectors is obtained as a result of the method for road marking detection.

Analogously, also a time series of corrected covariance matrixes may be obtained in respective further implementations

According to the improved concept, also a method for guiding a motor vehicle at least in part automatically, is provided. To this end, a method for road marking detection according to the improved concept is carried out, wherein the environmental sensor system is mounted to or on the motor vehicle. The motor vehicle is guided at least in part automatically depending on the corrected state vector, in particular by means of an electronic vehicle guidance system of the vehicle.

In particular, the computing unit is comprised by the motor vehicle, for example by the electronic vehicle guidance system.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

Guiding the motor vehicle at least in part automatically may for example include a lateral control of the motor vehicle.

According to several implementations of the method for guiding a motor vehicle at least in part automatically, the computing unit is used to generate electronic map data representing an environment of the motor vehicle depending on the corrected state vector.

According to several implementations, the motor vehicle is guided at least in part automatically depending on the electronic map data or a further motor vehicle is guided at least in part automatically depending on the electronic map data.

In this way, a particularly reliable way of generating electronic map data such as high definition maps, HD-maps, is provided.

According to several implementations, one or more control signals for guiding the motor vehicle at least in part automatically are generated, in particular by using a control unit of the electronic vehicle guidance system, depending on a corrected state vector or depending on the electronic map data.

The one or more control signals may for example be supplied to one or more respective actuators to control the motion of the motor vehicle.

According to the improved concept, also a road marking detection system is provided. The road marking detection system comprises an environmental sensor system, which is configured to generate a first sensor dataset depicting a road marking at a first measurement instance and a sensor dataset depicting the road marking at a second measurement instance. The road marking detection system comprises at least one motion sensor system, which is configured to determine at least one motion parameter characterizing a motion of the environmental sensor system relative to the road marking between the first measurement instance and the second measurement instance. The road marking detection system comprises a computing unit, which is configured to generate, based on the first predefined segment, a first observed state vector describing the road marking geometrically at the first measurement instance and to generate, based on the sensor dataset, a second observed state vector describing the road marking geometrically at the second measurement instance. The computing unit is configured to compute a predicted state vector for the second measurement instance depending on the at least one motion parameter and the first observed state vector and to generate a corrected state vector for the second measurement instance depending on the predicted state vector and the second observed state vector.

According to several implementations of the road marking detection system according to the improved concept, the environmental sensor system comprises a lidar system.

In such implementations, the first and the second sensor datasets may comprise respective point clouds generated based on sensor signals of the lidar system.

Further implementations of the road marking detection system follow directly from the various implementations of the method for road marking detection according to the improved concept and the method for guiding a motor vehicle at least in part automatically according to the improved concept and vice versa respectively. In particular, a road marking detection system may be configured to carry out a method according to the improved concept or carries out a method according to the improved concept.

According to the improved concept, also an electronic vehicle guidance system comprising a road marking detection system according to the improved concept is provided. The electronic vehicle guidance system comprises a control unit, which is configured to generate one or more control signals for guiding a motor vehicle at least in part automatically depending on the corrected state vector.

Therein, the computing unit may comprise the control unit or the control unit and the computing unit may be implemented separately.

According to the improved concept, also a motor vehicle comprising an electronic vehicle guidance system according to the improved concept or road marking detection system according to the improved concept is provided.

According to the improved concept, also a first computer program comprising first instructions is provided. When the first instructions or the first computer program, respectively, are executed by the road marking system according to the improved concept, the first instructions cause the road marking system to carry out a method for road marking detection according to the improved concept.

According to the improved concept, also a second computer program comprising second instructions is provided. When the second instructions or the second computer program, respectively, are executed by an electronic vehicle guidance system according to the improved concept, the second instructions cause the electronic vehicle guidance system to carry out a method for guiding a motor vehicle at least in part automatically according to the improved concept.

According to the improved concept, also a computer-readable storage medium is provided. The computer-readable storage medium stores a first computer program according to the improved concept and/or a second computer program according to the improved concept.

Further features of the invention are apparent from the claims, the figures and the description of figures. The features and feature combinations mentioned above in the description as well as the features and feature combinations mentioned below in the description of figures and/or shown in the figures alone may not only be encompassed by the improved concept in the respectively specified combination, but also in other combinations. Thus, implementations of the improved concept are encompassed and disclosed, which may not explicitly be shown in the figures or explained, but arise from and can be generated by separated feature combinations from the explained implementations. Implementations and feature combinations, which do not have all features of an originally formulated claim, may be encompassed by the improved concept. Moreover, implementations and feature combinations, which extend beyond or deviate from the feature combinations set out in the relations of the claims, may be encompassed by the improved concept.

In the figures:

Fig. 1 shows schematically a motor vehicle comprising an electronic vehicle guidance system according to the improved concept;

Fig. 2 shows schematically an exemplary implementation of an environmental sensor system;

Fig. 3 shows schematically a further exemplary implementation of an environmental sensor system;

Fig. 4 shows schematically an example of a lidar point cloud;

Fig. 5    shows schematically a possibility to approximate a road marking geometrically;

Fig. 6    shows exemplary time series of state parameters of a road marking;

Fig. 7    shows distributions of the parameters of Fig. 6;

Fig. 8    shows further exemplary time series of state parameters of a road marking; and

Fig. 9    shows distributions of the parameters of Fig. 8.

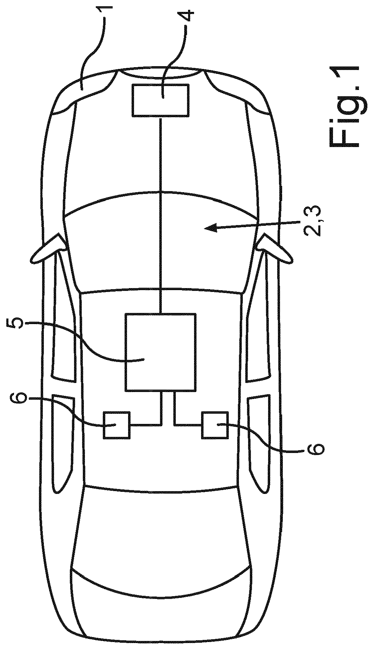

Fig. 1 shows a motor vehicle 1 equipped with an electronic vehicle guidance system 3 for guiding the motor vehicle 1 at least in part automatically. The electronic vehicle guidance system 3 comprises road marking detection system 2 according to the improved concept.

The road marking detection system 2 comprises an environmental sensor system 4, which is for example implemented as a lidar system. The road marking detection system 2 further comprises a computing unit 5 connected to the environmental sensor system 4 and one or more motion sensors 6 connected to the computing unit 5. The motion sensors 6 may comprise one or more acceleration sensors and/or yaw-rate sensors, et cetera.

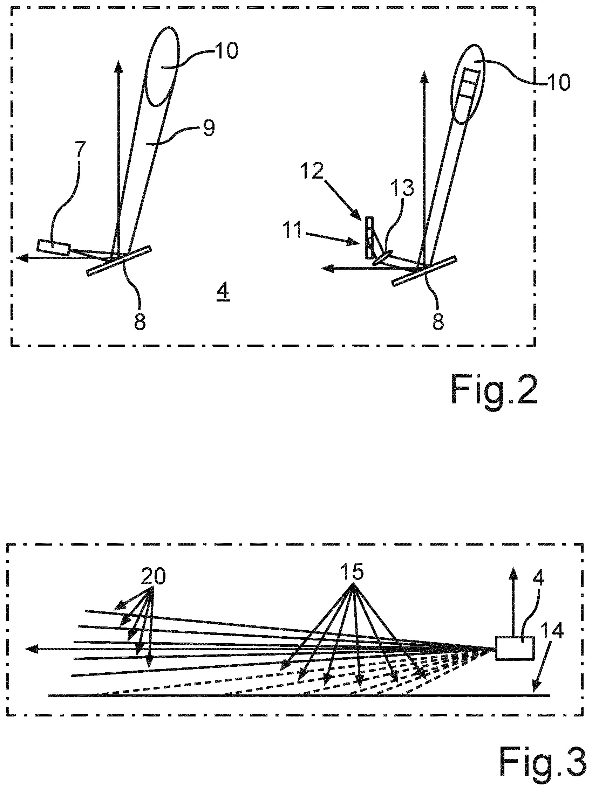

Fig. 2 shows schematically the construction of an exemplary implementation of the environmental sensor system 4 as a lidar laser scanner. On the left side of Fig. 2, an emission phase is depicted, while on the right side a detection phase is depicted.

The environmental sensor system 4 comprises an emitting unit 7, for example one or more infrared laser sources, configured to emit pulsed light 9 into the environment of the vehicle 1. To this end, a modulation unit 8, for example a rotatable mirror, is arranged to deflect the light pulses 9 into different horizontal directions depending on the position of the modulation unit 8. The initially collimated laser light 9 may be defocused in order to produce a beam with a non-zero direction angle such that the light 9 covers a solid angle range 10 in the environment.

The sensor system 4 further comprises a detecting unit 11 containing, for example, a group or an array of photo detectors, which may collect reflected portions of the light 9 impinging from respective parts of the range 10 and to convert the detected reflected light into corresponding detector signals. The computing unit 5 may evaluate the detector signals to determine a respective position of the point of reflection in the environment and a distance of this point from the environmental sensor system 4, for example by means of a time-of-flight measurement.

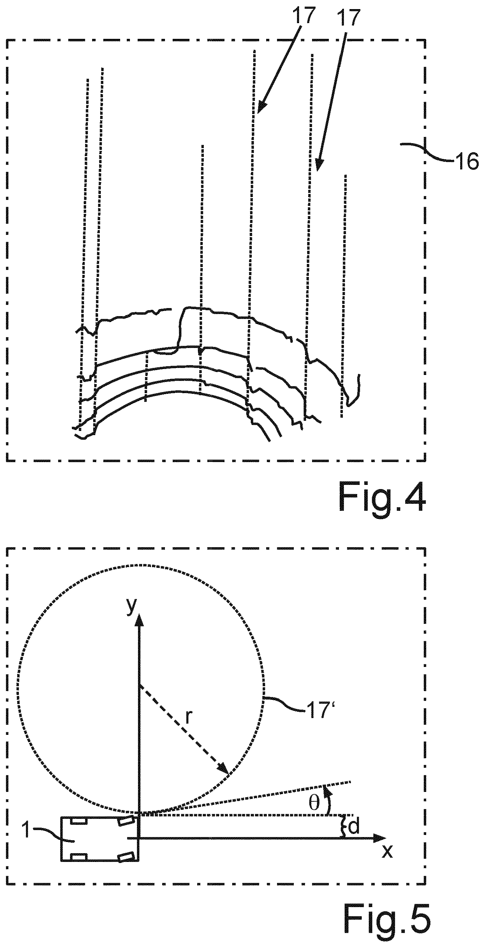

As a result, a point cloud 16 as schematically depicted in Fig. 4 is provided, which consists of measurements that are output in a spherical coordinate system. The time-of-flight measurement yields the respective radial distance, the angular position of the modulation unit 8 determines the horizontal or azimuthal angle and the position of the respective detector 12 with respect to the modulation unit 8 determines the polar angle or the vertical angle. Fig. 4 shows an example of a respective point cloud 16 projected into a two-dimensional plane parallel to the road surface.

As depicted in Fig. 3, the environmental sensor system 4 mounted on the vehicle 1 driving on a road 14 may generate a plurality of layers of scan points, each layer corresponding to a specific optical detector 12. Depending on whether the corresponding light is reflected from the surface of the road 14, the layers may be denoted as ground layers 15 or non-ground layers 20, respectively. The ground layers 15 may therefore depict or represent road markings 17 on the road surface 14, as indicated in Fig. 4.

The computing unit 5 may approximate a road marking 17, depicted in the point cloud 16, for example, by means of a second degree polynomial 17' as depicted in Fig. 5. By using the second degree polynomial 17', the road marking 17 may be approximately described as

$$y = ax^2 + bx + c \,,$$

$$a = \frac{1}{2r},$$

$$b = \tan(\theta) \,,$$

$$c = d \,.$$

Therein, x and y correspond to the coordinate in longitudinal and lateral direction, respectively, of a sensor coordinate system rigidly connected to the environmental sensor system 4, as depicted in Fig. 4. d represents a constant lateral offset, for example at x = 0, θ r represents the approximated angle, the tangent to the polynomial 17' at x = 0 includes with the longitudinal axis and r represents the approximated radius of curvature at x = 0. The computing unit 5 may therefore generate an observed state vector for the respective measurement instance given by $x_0 = (a, b, c)$. In addition, the environmental sensor system may output information that allows the computing unit 5 to determine a covariance matrix for the respective measurement instance

$$S = \begin{pmatrix} \sigma_a{}^2 & \sigma_{ab} & \sigma_{ac} \\ \sigma_{ba} & \sigma_b{}^2 & \sigma_{bc} \\ \sigma_{ca} & \sigma_{cb} & \sigma_c{}^2 \end{pmatrix}.$$

Alternatively, the computing unit may determine the covariance matrix based on the distribution of previous measurements and corresponding state vectors.

In this way, the computing unit 5 generates for each of a plurality of consecutive measurement instances an observed state vector and a corresponding covariance matrix. Furthermore, the computing unit 5 continuously or repeatedly reads the output of the motion sensors 6 to determine respective values for the longitudinal velocity $v_x$, the lateral velocity $v_y$, and the yaw-rate $\omega$ of the vehicle 1 and consequently of the environmental sensor system 4.

The computing unit 5 applies a non-linear state estimator algorithm to predict the status or situation of each road marking 17 in relation to the vehicle 1 separately. In particular, no inference about the distance between different road markings 17 is needed. The advantage of this approach, in comparison to standard linear estimators such as standard Kalman filters, is that it is not limited to linear system or Gaussian distributions. Therefore, a better accuracy is achieved without increasing the computational complexity. The state estimation algorithm comprises two main stages, a time projection and a time correction phase.

The computing unit may generate based on the respective state vector for each of the measurement instances a plurality of sampling state vectors according to the rule

$$x_i = \begin{cases} \mu + \left[ \sqrt{(n+\lambda)S} \right]_i & 1 \le i \le n \\ \mu - \left[ \sqrt{(n+\lambda)S} \right]_{i-n} & n \le i \le 2n . \end{cases}$$

**Therein,** $\lambda = (\alpha^2(n+\kappa) - n)$ is a scaling parameter, n is the number of dimensions of the state vector and $\alpha$ and $\kappa$ are predefined parameters controlling the spread of the points from the mean $\mu$, which may for example be given by the entries of $x_0$. The subscript i chooses the i-th column vector of the covariance matrix S.

In the time projection phase, the computing unit 5 generates respective predicted state vectors by projecting the observed state vector and the sampling state vectors of a given measurement instance k-1 to the subsequent measurement instance k according to the underlying dynamics of the system represented by the state transition function

$$f(x_{k-1}, \Delta t) = \begin{pmatrix} 1 & 0 & 0 \\ 2v_x\Delta t & 1 & 0 \\ (v_x\Delta t)^2 & v_x\Delta t & 1 \end{pmatrix} \cdot x_{k-1} + \begin{pmatrix} 0 \\ -\tan(\omega\Delta t) \\ -v_x\Delta t \end{pmatrix},$$

wherein $\Delta t$ denotes the time between two consecutive measurement instances.

The result of the time projection phase is then given by

$$\bar{x} = \sum \omega^m\, f(X_{k-1}, \Delta t),$$

$$\bar{P} = \sum \omega^c (f(X_{k-1}, \Delta t) - \bar{x})(f(X_{k-1}, \Delta t) - \bar{x})^T + V_k,$$

$$Z = (h \circ f)(X_{k-1}, \Delta t),$$

$$\mu_z = \sum \omega^m Z,$$

$$P_z = \sum \omega^c (Z - \mu_z)(Z - \mu_z)^T + W_k .$$

**Therein,** the first equation projects the estimations of the state vector and therefore the variables to track of the previous measurement instance into the current measurement instance and the second equation projects the covariance matrix of the state vector into current measurement instance. The third and the fourth equation project the state vector into measurement space to fit it into the proper dimensionality and the fifth equation computes the covariance of the measurement. In a simple example, the state vector has already the dimension of the measurement space, then h represents identity. Furthermore, $X_{k-1}$ represents a matrix containing $x_0$ and the $x_i$ of the measurement instance k-1 as columns, the sums run over i and for each summand, f is applied to the respective column i of the matrix $X_{k-1}$. $\omega^c$ and $\omega^m$ represent weights for prioritizing samples and $V_k$ and $W_k$ represent uncertainties the model is not able to describe and the sensor representation is not able to cover.

In the time correction phase, the state vector and its covariance matrix are updated considering the differences between projected estimations and actual measurements weighted by the gain of the system

$$x^+ = \bar{x} + K(z - \mu_z) ,$$

$$P^+ = \bar{P} - K P_z K^T ,$$

$$K = \sum \mu_z (f(X_{k-1}, \Delta t) - \bar{x})(Z - \mu_z)^T P_z^{-1} .$$

Therein, the third equation calculates the gain of the system, while the first and the second equation update the state vector and its covariance considering the differences between estimations and measurements weighted by the gain. These updates may be considered to represent the output of the estimations represent the output of the non-linear state estimator.

As a result, a time series of corrected or updated state vectors and covariance matrixes is obtained. The described approach interprets independently each road marking polynomial representation given by the respective state vector as a distribution and not only as a unique sample.

By means of the described mechanism, in particular the combination of the polynomial representation and the polynomial state estimation, the output of the approach comprises a polynomial representation of each road marking 17 that exhibits reduced variations, in particular smaller standard deviations, regarding lateral offsets, orientation and curvature. Furthermore, it is able to provide a certain amount of continuity to the signal due to the time projection step even when it cannot be measured or the amount of noise present makes an unreliable measurement.

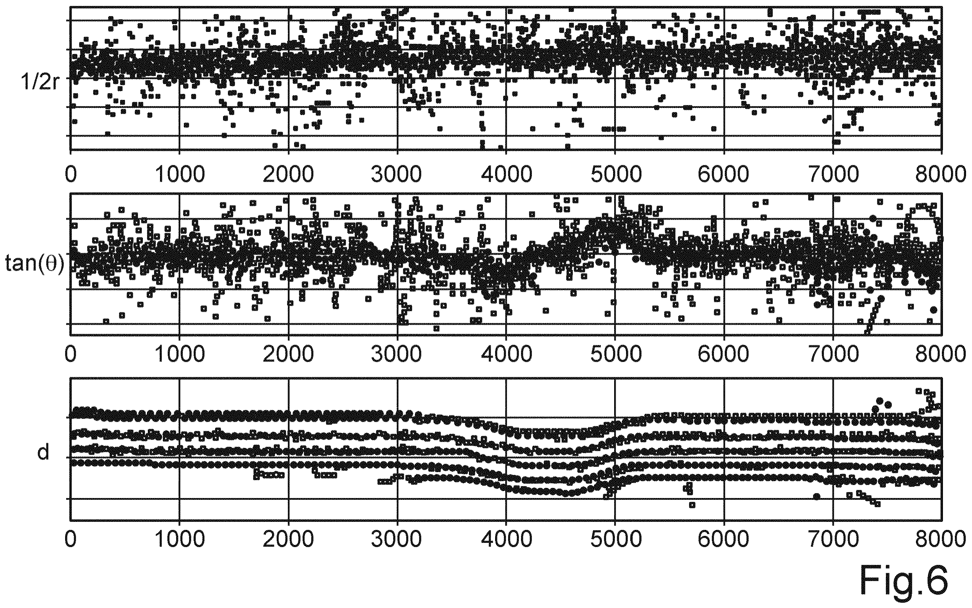

The described effects can be seen in different driving situations. In Fig. 6 for example, entries of the state vector are given as a function of time for a driving maneuver, where the vehicle 1 is driven on a straight road 14 and performs a lane change and back. The upper panel in Fig. 6 shows the curvature 1/(2r), the middle panel shows the orientation tan($\theta$) and the lower panel shows the lateral offset d. Fig. 6 shows the detected values of the polynomial as they are captured in time as empty symbols. The dispersion is rather large. The filled symbols show the output of the method according to the improved concept. The resulting curves are sharper and the dispersion is clearly reduced.

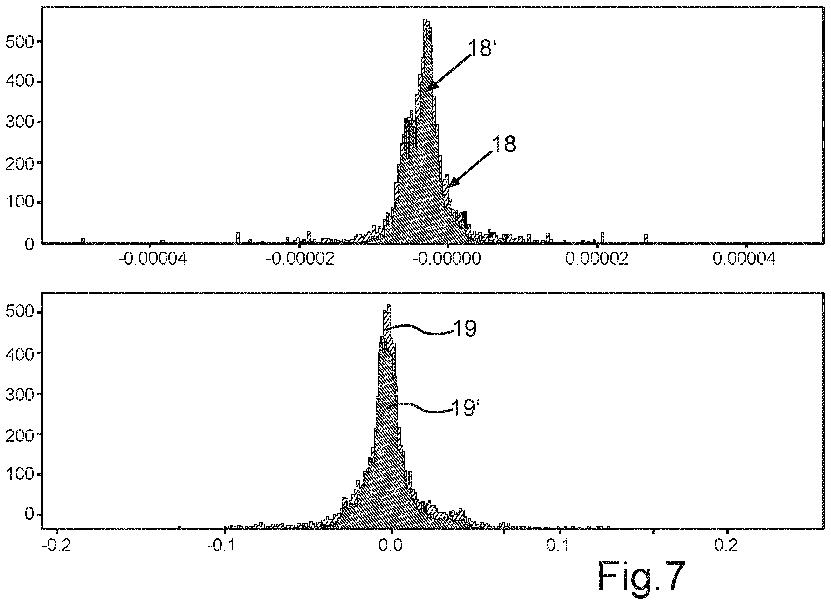

Fig. 7 shows in the upper panel the respective distribution 18 for the originally values and the distribution 18' for the output of the non-linear state estimator for the curvature 1/(2r). In the lower panel, the respective distributions 19, 19' for the orientation tan($\theta$) are shown.

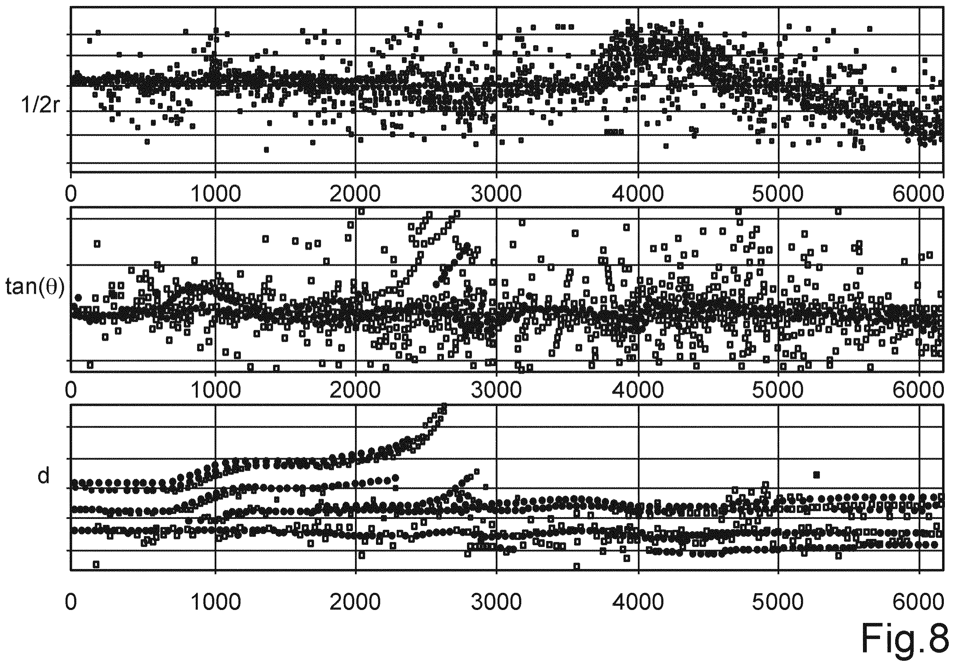

In Fig. 8, a representation analog to Fig. 6 is shown now for a more acute situation, namely driving at a highway exit, which turns into a sharp curve. Fig. 8 shows how the changes in the detections, especially in the curvature, are tracked but the noise is greatly reduced by means of the method according to the improved concept. Furthermore the sudden changes in the orientations can be followed rather well.

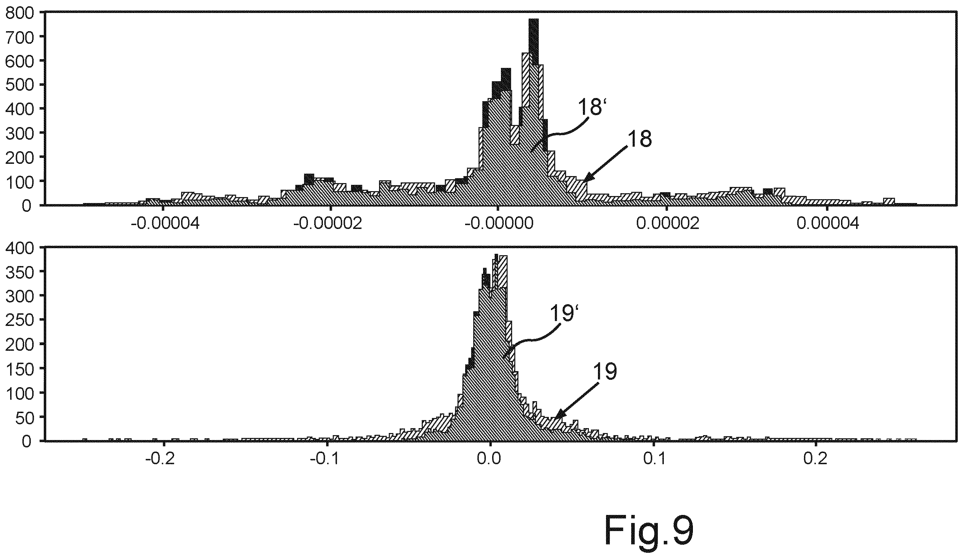

Fig. 9 shows the distributions 18, 18' for the curvature in the upper panel and the distributions 19, 19' for the orientation in the lower panel for the driving situation of Fig. 8. Here, it is clearly visible that the approach works well also for non-Gaussian distributions.

As described, in particular with respect to figures, the improved concept allows for a stable road marking detection that follows closely the actual road markings in a consistent and reliable manner. The road markings are represented by respective sets of parameters that describe its underlying pattern and may be applied to a non-linear state estimator to stabilize the detection with respect to the changes in the parameters from cycle to cycle.

The improved concept is able to handle driving maneuvers, such as back and forth lane changes and rather sharp curves. Abrupt changes in the time series of the detections may be diminished or even avoided. In implementations using a non-linear state estimator, non-Gaussian processes may be tackled but do not need to be linearized. Furthermore, the computational costs are not increased or at least not significantly increased with respect to a linear state estimator.

**Claims**

1. Method for road marking detection, wherein a first sensor dataset depicting a road marking (17) at a first measurement instance and a second sensor dataset depicting the road marking (17) at a second measurement instance are generated by using an environmental sensor system (4) comprising a lidar system; wherein

    - at least one motion parameter characterizing a motion of the environmental sensor system (4) relative to the road marking (17) between the first measurement instance and the second measurement instance is determined; and
    - a computing unit (5) is used to

        - generate, based on the first sensor dataset comprising point clouds generated based on sensor signals of the lidar system, a first observed state vector describing the road marking (17) geometrically at the first measurement instance;
        - generate, based on the second sensor dataset comprising point clouds generated based on sensor signals of the lidar system, a second observed state vector describing the road marking (17) geometrically at the second measurement instance;
        - compute a predicted state vector for the second measurement instance depending on the at least one motion parameter and the first observed state vector; and
        - generate a corrected state vector for the second measurement instance depending on the predicted state vector and the second observed state vector.

2. Method according to claim 1, wherein

    - the computing unit (5) is used to generate two or more first sampling state vectors for the first measurement instance depending on the first observed state vector and depending on at least one parameter describing a multidimensional distribution;
    - the predicted state vector is computed depending on the two or more first sampling state vectors.

3. Method according to one of the preceding claims, wherein the computing unit (5) is used to determine a first polynomial depending on the first sensor dataset to approximate the road marking (17) at the first time instance and to determine a second polynomial depending on the second sensor dataset to approximate the road marking (17) at the second time instance, wherein the first observed state vector comprises coefficients of the first polynomial and the second observed state vector comprises coefficients of the second polynomial.

4. Method according to one of the preceding claims, wherein the computing unit (5) is used to

    - compute a predicted covariance matrix for the second measurement instance depending on the at least one motion parameter, the first observed state vector and the predicted state vector; and
    - generate a corrected covariance matrix for the second measurement instance depending on the predicted covariance matrix and the second observed state vector.

5. Method according to one of the preceding claims, wherein

    - a plurality of sensor datasets depicting the road marking (17) at respective consecutive measurement instances is generated by using the environmental sensor system (4), wherein the plurality of sensor datasets includes the first sensor dataset and the second sensor dataset;
    - for each of the measurement instances, the at least one motion parameter characterizing the motion of the environmental sensor system (4) relative to the road marking (17) between the respective measurement instance and a respective subsequent measurement instance is determined;
    - for each of the measurement instances, the computing unit (5) is used to generate a respective observed state vector describing the road marking (17) geometrically at the respective measurement instance based on the respective sensor dataset;
    - for each of the measurement instances except a final measurement instance, the computing unit (5) is used to
    - compute a predicted state vector for a respective subsequent measurement instance depending on the respective at least one motion parameter and the observed state vector of the respective measurement instance; and

- generate a corrected state vector for the respective subsequent measurement instance depending on the predicted state vector for the respective subsequent measurement instance and the observed state vector of the respective subsequent measurement instance.

6. Method for guiding a motor vehicle at least in part automatically, the method comprising the steps of

- a method for road marking detection according to one of the previous claims, wherein the environmental sensor system (4) is mounted on the motor vehicle (1); and
- guiding the motor vehicle (1) at least in part automatically depending on the corrected state vector.

7. Method according to claim 6, wherein

- the computing unit (5) is used to generate electronic map data representing an environment of the motor vehicle (1) depending on the corrected state vector; and
- the motor vehicle (1) is guided at least in part automatically depending on the electronic map data.

8. Method according to one of claims 6 or 7, wherein one or more control signals for guiding the motor vehicle (1) at least in part automatically are generated depending on the corrected state vector.

9. Road marking detection system comprising an environmental sensor system (4) which comprises a lidar system, which is configured to generate a first sensor dataset depicting a road marking (17) at a first measurement instance and a second sensor dataset depicting the road marking (17) at a second measurement instance; wherein

- the road marking detection system (2) comprises at least one motion sensor system (6), which is configured to determine at least one motion parameter characterizing a motion of the environmental sensor system (4) relative to the road marking (17) between the first measurement instance and the second measurement instance; and
- the road marking detection system (2) comprises a computing unit (5), which is configured to

- generate, based on the first sensor dataset comprising point clouds generated based on sensor signals of the lidar system, a first observed state vector describing the road marking (17) geometrically at the first measurement instance;
- generate, based on the second sensor dataset comprising point clouds generated based on sensor signals of the lidar system, a second observed state vector describing the road marking (17) geometrically at the second measurement instance;
- compute a predicted state vector for the second measurement instance depending on the at least one motion parameter and the first observed state vector; and
- generate a corrected state vector for the second measurement instance depending on the predicted state vector and the second observed state vector.

10. Electronic vehicle guidance system comprising a road marking detection system (2) according to claim 9 and a control unit, which is configured to generate one or more control signals for guiding a motor vehicle (1) at least in part automatically depending on the corrected state vector.

11. Motor vehicle comprising an electronic vehicle guidance system (3) according to claim 10 or a road marking detection system (2) according to claim 9.

12. Computer program comprising instructions, which,

- when executed by a road marking detection system (2) according to claim 9, cause the road marking detection system (2) to carry out a method according to one of claims 1 to 5; or
- when executed by an electronic vehicle guidance system (3) according to claim 10, cause the electronic vehicle guidance system (3) to carry out a method according to one of claims 6 to 8.

13. Computer readable storage medium storing a computer program according to claim 12.

**Patentansprüche**

1. Verfahren zur Straßenmarkierungsdetektion, wobei ein erster Sensordatensatz, der eine Straßenmarkierung (17) an einer ersten Messinstanz darstellt, und ein zweiter Sensordatensatz, der die Straßenmarkierung (17) an einer zweiten Messinstanz darstellt, unter Verwendung eines Umgebungssensorsystems (4), das ein Lidar-System umfasst, erzeugt werden; wobei

   - mindestens ein Bewegungsparameter bestimmt wird, der eine Bewegung des Umgebungssensorsystems (4) relativ zur Straßenmarkierung (17) zwischen der ersten Messinstanz und der zweiten Messinstanz charakterisiert; und
   - eine Recheneinheit (5) verwendet wird, um
   - basierend auf dem ersten Sensordatensatz, der Punktwolken umfasst, die basierend auf Sensorsignalen des Lidar-Systems erzeugt werden, einen ersten beobachteten Zustandsvektor zu erzeugen, der die Straßenmarkierung (17) geometrisch bei der ersten Messinstanz beschreibt;
   - basierend auf dem zweiten Sensordatensatz, der Punktwolken umfasst, die basierend auf Sensorsignalen des Lidar-Systems erzeugt werden, einen zweiten beobachteten Zustandsvektor zu erzeugen, der die Straßenmarkierung (17) geometrisch bei der zweiten Messinstanz beschreibt;
   - einen vorhergesagten Zustandsvektor für die zweite Messinstanz in Abhängigkeit von dem mindestens einen Bewegungsparameter und dem ersten beobachteten Zustandsvektor zu berechnen; und
   - einen korrigierten Zustandsvektor für die zweite Messinstanz in Abhängigkeit von dem vorhergesagten Zustandsvektor und dem zweiten beobachteten Zustandsvektor zu erzeugen.

2. Verfahren nach Anspruch 1, wobei

   - die Recheneinheit (5) verwendet wird, um zwei oder mehr erste Abtastzustandsvektoren für die erste Messinstanz in Abhängigkeit von dem ersten beobachteten Zustandsvektor und in Abhängigkeit von mindestens einem Parameter, der eine mehrdimensionale Verteilung beschreibt, zu erzeugen;
   - der vorhergesagte Zustandsvektor in Abhängigkeit von den zwei oder mehr ersten Abtastzustandsvektoren berechnet wird.

3. Verfahren nach einem der vorhergehenden Ansprüche, wobei die Recheneinheit (5) verwendet wird, um ein erstes Polynom in Abhängigkeit von dem ersten Sensordatensatz zu bestimmen, um die Straßenmarkierung (17) zu der ersten Zeitinstanz zu approximieren, und um ein zweites Polynom in Abhängigkeit von dem zweiten Sensordatensatz zu bestimmen, um die Straßenmarkierung (17) zu der zweiten Zeitinstanz zu approximieren, wobei der erste beobachtete Zustandsvektor Koeffizienten des ersten Polynoms umfasst und der zweite beobachtete Zustandsvektor Koeffizienten des zweiten Polynoms umfasst.

4. Verfahren nach einem der vorhergehenden Ansprüche, wobei die Recheneinheit (5) verwendet wird, um

   - eine vorhergesagte Kovarianzmatrix für die zweite Messinstanz in Abhängigkeit von dem mindestens einen Bewegungsparameter, dem ersten beobachteten Zustandsvektor und dem vorhergesagten Zustandsvektor zu berechnen; und
   - eine korrigierte Kovarianzmatrix für die zweite Messinstanz in Abhängigkeit von der vorhergesagten Kovarianzmatrix und dem zweiten beobachteten Zustandsvektor zu erzeugen.

5. Verfahren nach einem der vorhergehenden Ansprüche, wobei

   - mehrere Sensordatensätze, die die Straßenmarkierung (17) an jeweilgen aufeinanderfolgenden Messinstanzen darstellen, unter Verwendung des Umgebungssensorsystems (4) erzeugt werden, wobei die mehreren Sensordatensätze den ersten Sensordatensatz und den zweiten Sensordatensatz beinhalten;
   - für jede der Messinstanzen der mindestens eine Bewegungsparameter bestimmt wird, der die Bewegung des Umgebungssensorsystems (4) relativ zur Straßenmarkierung (17) zwischen der jeweiligen Messinstanz und einer jeweiligen nachfolgenden Messinstanz charakterisiert;
   - für jede der Messinstanzen die Recheneinheit (5) verwendet wird, um einen jeweiligen beobachteten Zustandsvektor zu erzeugen, der die Straßenmarkierung (17) geometrisch an der jeweiligen Messinstanz basierend auf dem jeweiligen Sensordatensatz beschreibt;
   - für jede der Messinstanzen mit Ausnahme einer endgültigen Messinstanz die Recheneinheit (5) verwendet wird, um

- einen vorhergesagten Zustandsvektor für eine jeweilige nachfolgende Messinstanz in Abhängigkeit von dem jeweiligen mindestens einen Bewegungsparameter und dem beobachteten Zustandsvektor der jeweiligen Messinstanz zu berechnen; und

- einen korrigierten Zustandsvektor für die jeweilige nachfolgende Messinstanz in Abhängigkeit von dem vorhergesagten Zustandsvektor für die jeweilige nachfolgende Messinstanz und dem beobachteten Zustandsvektor der jeweiligen nachfolgenden Messinstanz zu erzeugen.

6. Verfahren zum mindestens teilweisen automatischen Führen eines Kraftfahrzeugs, wobei das Verfahren die folgenden Schritte umfasst:

   - ein Verfahren zur Straßenmarkierungsdetektion nach einem der vorhergehenden Ansprüche, wobei das Umgebungssensorsystem (4) an dem Kraftfahrzeug (1) montiert ist; und
   - Führen des Kraftfahrzeugs (1) mindestens teilweise automatisch in Abhängigkeit von dem korrigierten Zustandsvektor.

7. Verfahren nach Anspruch 6, wobei

   - die Recheneinheit (5) verwendet wird, um elektronische Kartendaten zu erzeugen, die eine Umgebung des Kraftfahrzeugs (1) in Abhängigkeit von dem korrigierten Zustandsvektor repräsentieren; und
   - das Kraftfahrzeug (1) in Abhängigkeit von den elektronischen Kartendaten mindestens teilweise automatisch geführt wird.

8. Verfahren nach einem der Ansprüche 6 oder 7, wobei ein oder mehrere Steuersignale in Abhängigkeit von dem korrigierten Zustandsvektor zum mindestens teilweisen automatischen Führen des Kraftfahrzeugs (1) erzeugt werden.

9. Straßenmarkierungsdetektionssystem, das ein Umgebungssensorsystem (4) umfasst, das ein Lidar-System umfasst, das dazu ausgelegt ist, einen ersten Sensordatensatz, der eine Straßenmarkierung (17) bei einer ersten Messinstanz darstellt, und einen zweiten Sensordatensatz, der die Straßenmarkierung (17) bei einer zweiten Messinstanz darstellt, zu erzeugen; wobei

   - das Straßenmarkierungsdetektionssystem (2) mindestens ein Bewegungssensorsystem (6) umfasst, das dazu ausgelegt ist, mindestens einen Bewegungsparameter zu bestimmen, der eine Bewegung des Umgebungssensorsystems (4) relativ zu der Straßenmarkierung (17) zwischen der ersten Messinstanz und der zweiten Messinstanz charakterisiert; und
   - das Straßenmarkierungsdetektionssystem (2) eine Recheneinheit (5) umfasst, die dazu ausgelegt ist
   - basierend auf dem ersten Sensordatensatz, der Punktwolken umfasst, die basierend auf Sensorsignalen des Lidar-Systems erzeugt werden, einen ersten beobachteten Zustandsvektor zu erzeugen, der die Straßenmarkierung (17) geometrisch bei der ersten Messinstanz beschreibt;
   - basierend auf dem zweiten Sensordatensatz, der Punktwolken umfasst, die basierend auf Sensorsignalen des Lidar-Systems erzeugt werden, einen zweiten beobachteten Zustandsvektor zu erzeugen, der die Straßenmarkierung (17) geometrisch bei der zweiten Messinstanz beschreibt;
   - einen vorhergesagten Zustandsvektor für die zweite Messinstanz in Abhängigkeit von dem mindestens einen Bewegungsparameter und dem ersten beobachteten Zustandsvektor zu berechnen; und
   - einen korrigierten Zustandsvektor für die zweite Messinstanz in Abhängigkeit von dem vorhergesagten Zustandsvektor und dem zweiten beobachteten Zustandsvektor zu erzeugen.

10. Elektronisches Fahrzeugführungssystem, das ein Straßenmarkierungsdetektionssystem (2) nach Anspruch 9 und eine Steuereinheit umfasst, die dazu ausgelegt ist, ein oder mehrere Steuersignale zum Führen eines Kraftfahrzeugs (1) mindestens teilweise automatisch in Abhängigkeit von dem korrigierten Zustandsvektor zu erzeugen.

11. Kraftfahrzeug, das ein elektronisches Fahrzeugführungssystem (3) nach Anspruch 10 oder ein Straßenmarkierungsdetektionssystem (2) nach Anspruch 9 umfasst.

12. Computerprogramm, das Anweisungen umfasst, die,

   - wenn durch ein Straßenmarkierungsdetektionssystem (2) nach Anspruch 9 ausgeführt, bewirken, dass das Straßenmarkierungsdetektionssystem (2) ein Verfahren nach einem der Ansprüche 1 bis 5 durchführt; oder

- wenn durch ein elektronisches Fahrzeugführungssystem (3) nach Anspruch 10 ausgeführt, bewirken, dass das elektronische Fahrzeugführungssystem (3) ein Verfahren nach einem der Ansprüche 6 bis 8 durchführt.

13. Computerlesbares Speichermedium, das ein Computerprogramm nach Anspruch 12 speichert.

**Revendications**

1. Procédé de détection de marquage routier, dans lequel un premier ensemble de données de capteur représentant un marquage routier (17) à un premier instant de mesure et un deuxième ensemble de données de capteur représentant le marquage routier (17) à un deuxième instant de mesure sont générés à l'aide d'un système de capteurs d'environnement (4) comprenant un système lidar ; où

- au moins un paramètre de mouvement caractérisant un mouvement du système de capteurs d'environnement (4) par rapport au marquage routier (17) entre le premier instant de mesure et le deuxième instant de mesure est déterminé ; et
- une unité de calcul (5) est utilisée pour
- générer, sur la base du premier ensemble de données de capteur comprenant des nuages de points générés sur la base de signaux de capteur du système lidar, un premier vecteur d'état observé décrivant géométriquement le marquage routier (17) lors du premier instant de mesure ;
- générer, sur la base du deuxième ensemble de données de capteur comprenant des nuages de points générés sur la base de signaux de capteur du système lidar, un deuxième vecteur d'état observé décrivant géométriquement le marquage routier (17) lors du deuxième instant de mesure ;
- calculer un vecteur d'état prédit pour le deuxième instant de mesure en fonction de l'au moins un paramètre de mouvement et du premier vecteur d'état observé ; et
- générer un vecteur d'état corrigé pour le deuxième instant de mesure en fonction du vecteur d'état prédit et du deuxième vecteur d'état observé.

2. Procédé selon la revendication 1, dans lequel

- l'unité de calcul (5) est utilisée pour générer deux, ou davantage, premiers vecteurs d'état d'échantillonnage pour le premier instant de mesure en fonction du premier vecteur d'état observé et en fonction d'au moins un paramètre décrivant une distribution multidimensionnelle ;
- le vecteur d'état prédit est calculé en fonction des deux, ou davantage, premiers vecteurs d'état d'échantillonnage.

3. Procédé selon l'une des revendications précédentes, dans lequel l'unité de calcul (5) est utilisée pour déterminer un premier polynôme en fonction du premier ensemble de données de capteur afin d'approximer le marquage routier (17) au premier instant et pour déterminer un deuxième polynôme en fonction du deuxième ensemble de données de capteur afin d'approximer le marquage routier (17) au deuxième instant, le premier vecteur d'état observé comprenant des coefficients du premier polynôme et le deuxième vecteur d'état observé comprenant des coefficients du deuxième polynôme.

4. Procédé selon l'une des revendications précédentes, dans lequel l'unité de calcul (5) est utilisée pour

- calculer une matrice de covariance prédite pour le deuxième instant de mesure en fonction de l'au moins un paramètre de mouvement, du premier vecteur d'état observé et du vecteur d'état prédit ; et
- générer une matrice de covariance corrigée pour le deuxième instant de mesure en fonction de la matrice de covariance prédite et du deuxième vecteur d'état observé.

5. Procédé selon l'une des revendications précédentes, dans lequel

- une pluralité de jeux de données de capteur représentant le marquage routier (17) à des instants de mesure consécutifs respectifs est générée à l'aide du système de capteurs d'environnement (4), la pluralité de jeux de données de capteur comprenant le premier jeu de données de capteur et le deuxième jeu de données de capteur ;
- pour chacun des instants de mesure, l'au moins un paramètre de mouvement caractérisant le mouvement du système de capteurs d'environnement (4) par rapport au marquage routier (17) entre l'instant de mesure respectif et un instant de mesure suivant respectif est déterminé ;

- pour chacun des instants de mesure, l'unité de calcul (5) est utilisée pour générer un vecteur d'état observé correspondant décrivant géométriquement le marquage routier (17) à l'instant de mesure correspondant sur la base de l'ensemble de données de capteur correspondant ;

- pour chacun des instants de mesure à l'exception d'un instant de mesure final, l'unité de calcul (5) est utilisée pour

- calculer un vecteur d'état prédit pour un instant de mesure suivant respectif en fonction de l'au moins un paramètre de mouvement respectif et du vecteur d'état observé de l'instant de mesure respectif ; et

- générer un vecteur d'état corrigé pour l'instant de mesure suivant respectif en fonction du vecteur d'état prédit pour l'instant de mesure suivant respectif et du vecteur d'état observé de l'instant de mesure suivant respectif.

6. Procédé pour guider un véhicule à moteur au moins en partie automatiquement, le procédé comprenant

- un procédé pour la détection de marquage routier selon l'une des revendications précédentes, où le système de capteurs d'environnement (4) est monté sur le véhicule à moteur (1) ; et

- le guidage du véhicule à moteur (1) au moins en partie automatiquement en fonction du vecteur d'état corrigé.

7. Procédé selon la revendication 6, dans lequel

- l'unité de calcul (5) est utilisée pour générer des données cartographiques électroniques représentant un environnement du véhicule à moteur (1) en fonction du vecteur d'état corrigé ; et

- le véhicule à moteur (1) est guidé au moins en partie automatiquement en fonction des données cartographiques électroniques.

8. Procédé selon l'une des revendications 6 ou 7, dans lequel
un ou plusieurs signaux de commande pour guider le véhicule à moteur (1) au moins en partie automatiquement sont générés en fonction du vecteur d'état corrigé.

9. Système de détection de marquage routier comprenant un système de capteurs d'environnement (4) qui comprend un système lidar, qui est configuré pour générer un premier ensemble de données de capteur représentant un marquage routier (17) à un premier instant de mesure et un deuxième ensemble de données de capteur représentant le marquage routier (17) à un deuxième instant de mesure ; où

- le système de détection de marquage routier (2) comprend au moins un système de capteurs de mouvement (6) qui est configuré pour déterminer au moins un paramètre de mouvement caractérisant un mouvement du système de capteurs d'environnement (4) par rapport au marquage routier (17) entre le premier instant de mesure et le deuxième instant de mesure ; et

- le système de détection de marquage routier (2) comprend une unité de calcul (5) qui est configurée pour

- générer, sur la base du premier ensemble de données de capteur comprenant des nuages de points générés sur la base de signaux de capteur du système lidar, un premier vecteur d'état observé décrivant géométriquement le marquage routier (17) lors du premier instant de mesure ;

- générer, sur la base du deuxième ensemble de données de capteur comprenant des nuages de points générés sur la base de signaux de capteur du système lidar, un deuxième vecteur d'état observé décrivant géométriquement le marquage routier (17) lors du deuxième instant de mesure ;

- calculer un vecteur d'état prédit pour le deuxième instant de mesure en fonction de l'au moins un paramètre de mouvement et du premier vecteur d'état observé ; et

- générer un vecteur d'état corrigé pour le deuxième instant de mesure en fonction du vecteur d'état prédit et du deuxième vecteur d'état observé.

10. Système de guidage électronique pour véhicule comprenant un système de détection de marquage routier (2) selon la revendication 9 et une unité de commande qui est configurée pour générer un ou plusieurs signaux de commande pour guider un véhicule à moteur (1) au moins en partie automatiquement en fonction du vecteur d'état corrigé.

11. Véhicule à moteur comprenant un système de guidage électronique pour véhicule (3) selon la revendication 10 ou un système de détection de marquage routier (2) selon la revendication 9.

12. Programme informatique comprenant des instructions qui,

- lorsqu'elles sont exécutées par un système de détection de marquage routier (2) selon la revendication 9, amènent le système de détection de marquage routier (2) à exécuter un procédé selon l'une des revendications 1 à 5 ; ou
- lorsqu'elles sont exécutées par un système de guidage électronique de véhicule (3) selon la revendication 10, amènent le système de guidage électronique de véhicule (3) à exécuter un procédé selon l'une des revendications 6 à 8.

13. Support de stockage lisible par ordinateur stockant un programme d'ordinateur selon la revendication 12.

Fig.1

Fig.2

Fig.3

Fig.4

Fig.5

Fig.6

Fig.7

Fig.8

Fig.9

**EP 4 252 202 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7933433 B2